Europäisches Patentamt

(19) European Patent Office

Office européen des brevets

(11) Publication number: **0 178 907**

**A2**

(12) # EUROPEAN PATENT APPLICATION

(21) Application number: **85307422.7**

(22) Date of filing: **15.10.85**

(51) Int. Cl.⁴: **H 01 T 19/00**

(30) Priority: **15.10.84 JP 217000/84**
**12.11.84 JP 237735/84**

(43) Date of publication of application:
**23.04.86 Bulletin 86/17**

(84) Designated Contracting States:
**DE FR GB IT**

(71) Applicant: **Nippon Paint Company, Ltd**
**2-1-2, Oyodokita Oyodo-ku**
**Osaka-shi Osaka-fu(JP)**

(71) Applicant: **SANKYO DENGYO COMPANY, LIMITED**
**14-13, Hon-cho 1-Chome**
**Nakano-ku Tokyo(JP)**

(72) Inventor: **Ikeda, Shoji**
**2-503, 67, Nishimachi Ikaga**
**Hirakata-shi Osaka-fu(JP)**

(72) Inventor: **Tsutsui, Koichi**
**5-chome, 13-4, Osumigaoka Tanabe-cho**
**Tsuzuki-gun Kyoto-fu(JP)**

(72) Inventor: **Saitoh, Toshiyuki**
**3-7-26, Hon-cho**
**Ageo-shi Saitama-ken(JP)**

(72) Inventor: **Inagaki, Tsuguya**
**Tokochi-Danchi 5-542 2469, Nagatsuda-cho**
**Midori-ku Yokohama-shi Kanagawa-ken(JP)**

(74) Representative: **Perry, Robert Edward et al,**
**GILL JENNINGS & EVERY 53-64 Chancery Lane**
**London WC2A 1HN(GB)**

(54) Activation apparatus and method.

(57) Activation apparatus (K) which comprises an excitation electrode (11); an opposing electrode (9); a dielectric number (10) disposed between the excitation and opposing electrodes (9,11); a high–voltage AC power source (4) connected to the excitation and opposing electrodes (9,11); an ion-inducing electrode (14) confronting and spaced from the excitation electrode (ii); either the high-voltage AC power source (4) or a separate high-voltage power source connected to, and capable of causing an electric discharge in the space (12) between, the excitation and ion-inducing electrodes (11,14); characterised in that a second dielectric (13) is disposed between the excitation and ion-inducing electrodes (11,14). An article can be activated, on discharge, by insertion into the discharge region.

Fig. 2

ACTIVATION APPARATUS AND METHOD


BACKGROUND OF THE INVENTION

The present invention generally relates to activation treatment in plasma state and more particularly, to an apparatus for and a method of uniformly and rapidly performing, under various gaseous atmospheres and at varied temperatures and pressures, physical and chemical treatments of surfaces of articles including plastic products, fibrous products, molded items made of paper, wood, metal or the like, powdery items such as metal powder, metallic oxide powder, pigment or the like, etc.

In order to activate surfaces of such articles to be treated as powdery or granular materials, films, various molded items, etc. so as to impart to the articles physical properties such as hydrophic nature, lyophilic nature, lipophilic nature, dispersion property, etc. or improve the above described physical properties of the articles, there has been conventionally proposed an activation apparatus for irradiating to the articles ions in plasma as shown in Figs. la and lb. This known activation apparatus includes a platelike opposite electrode 1, a dielectric member 2, a comb-shaped excitation electrode 3 formed with a plurality of long slots 3a, a high-voltage AC power source 4 for impressing a high AC voltage between the opposite electrode 1 and the excitation electrode 3, an ion inducing electrode 6 and a high-voltage DC power source 7 for impressing a high DC voltage between the excitation electrode 3 and the ion inducing electrode 6. The dielectric member 2 is interposed between the opposite electrode 1 and the excitation electrode 3, while the AC power source 4 is connected to the opposite electrode 1 and the excitation electrode 3. Meanwhile, the ion inducing electrode 6 confronts the excitation electrode 3 via a space 5, while the DC power source 7 is connected to the excitation electrode 3 and the ion inducing electrode 6. In this known activation apparatus, plasma creeping along the surface of the excitation electrode 3 is produced under various gaseous atmospheres. On the other hand, an electric field in which electrons flow from the excitation electrode 3 to the ion inducing electrode 6 is produced between the excitation electrode 3 and the ion inducing electrode 6. Thus, only negative ions are induced from the plasma produced along the surface of the excitation electrode 3. Accordingly, a platelike article 8 inserted between the excitation electrode 3 and the ion inducing electrode 6 is activated, on its surface confronting the excitation electrode 3, by the negative ions from the excitation electrode 3.

However, the known activation apparatus has such a drawback that when the ion inducing electrode 6 has flaws on the surface, the negative ions are locally induced from the excitation electrode 3, thereby possibly resulting in local concentration of activation of the article 8. Furthermore, the known activation apparatus is disadvantageous in that conductive fine particles constituting the excitation electrode 3 adhere to the surface of the article 8 or penetrate into the article 8 through electric discharge, thereby resulting in insufficient activation of the article 8.

Meanwhile, in order to improve such characteristics of plastic products, fibrous products, molded items made of paper, wood, etc. as surface adhesive property, coating property, bonding property, wettability, durability, etc. or such characteristics of powdery items including metal powder, metallic oxide powder, pigment or the like as wettability, dispersion property, etc., various activation methods such as chemical treatment using an acid, an alkali or the like, treatment through ultraviolet-light irradiation, flame treatment, etc. are recently under study and have been put to practical use in some fields of industry.

However, these known activation methods have both merits and demerits. For example, the chemical treatment has such an inconvenience that a wet process such as cleaning, etc. is required to be performed, thus making its processes complicated. Meanwhile, since ultraviolet light has a tendency to proceed along a linear path, the treatment through ultraviolet-light irradiation is not effective for treating articles having complicated contours. Furthermore, the flame treatment has a disadvantage that articles to be treated are exposed to high temperatures and therefore, are restricted in kinds, contours, treatment time periods, etc.

SUMMARY OF THE INVENTION

Accordingly, an essential object of the present invention is to provide an apparatus for and a method of uniformly and rapidly activating a surface of an article to a desired level, with substantial elimination of the disadvantages inherent in conventional apparatuses and methods of this kind.

In order to accomplish this object of the present invention, an activation apparatus for activating a surface of an article, according to one aspect of the present invention includes an opposite electrode, an excitation electrode, a dielectric member disposed between said opposite electrode and said excitation electrode, a high voltage AC power source connected to said opposite electrode and said excitation electrode, an ion inducing electrode confronting said excitation electrode through a space, and a high-voltage power source connected to said excitation electrode and said ion inducing electrode such that electric discharge is effected between said excitation electrode and said ion inducing electrode, with said surface of said article being activated by inserting said article into said space subjected to said electric discharge, the improvement comprising: a dielectric which is disposed between said article and at least one of said excitation electrode and said ion inducing electrode so as to cover an electrode surface of said one of said excitation electrode and said ion inducing electrode.

Furthermore, a method of activating a surface of an article, according to another aspect of the present invention, comprises the steps of: impressing a high voltage between an excitation electrode and an opposite electrode so as to effect electric discharge therebetween such that said electric discharge forms an electric discharge region; feeding gas to said electric discharge region so as to convert said gas into plasma; and injecting said plasma over said article.

BRIEF DESCRIPTION OF THE DRAWINGS

This object and features of the present invention will become apparent from the following description taken in conjunction with the preferred embodiments thereof with reference to the accompanying drawings, in which:

Fig. 1a is a front elevational view of a prior art activation apparatus (already referred to);

Fig. 1b is a top plan view of an excitation electrode employed in the prior art activation apparatus of Fig. 1a (already referred to);

Fig. 2 is a front elevational view of an activation apparatus according to a first embodiment of the present invention;

Fig. 3 is a top plan view of an excitation electrode employed in the activation apparatus of Fig. 2;

Figs. 4a to 4h are electrical circuit diagrams indicative of various configurations of a power source employed in the activation apparatus of Fig. 2;

Figs. 5 to 21 are views similar to Fig. 2, particularly showing second to eighteenth embodiments of the present invention, respectively;

Figs. 22a and 22b are, respectively, a top plan view and a front elevational view of an activation apparatus which is a first modification of the present invention;

Figs. 23a and 23b are views similar to Figs. 22a and 22b, respectively, particularly showing a second modification of the present invention;

Fig. 24 is a perspective view of an electrode unit employed in a first activation apparatus for carrying out an activation method of the present invention;

Fig. 25 is a perspective view of the first activation apparatus of Fig. 24;

Figs. 26a and 26b are a cross-sectional view and a longitudinal sectional view of the first activation apparatus of Fig. 24, respectively;

Fig. 27 is a partially cutaway perspective view of an electrode unit employed in a second activation apparatus for carrying out the activation method of the present invention;

Fig. 28 is a longitudinal sectional view of the second activation apparatus of Fig. 27;

Figs. 29a and 29b are, respectively, a top plan view and a front elevational view of a third activation apparatus for carrying out the activation method of the present invention; and

Figs. 30a and 30b are views similar to Figs. 29a and 29b, respectively, particularly showing a fourth activation apparatus for carrying out the activation method of the present invention.

Before the description of the present invention proceeds, it is to be noted that like parts are designated by like reference numerals throughout several views of the accompanying drawings.

DETAILED DESCRIPTION OF THE INVENTION

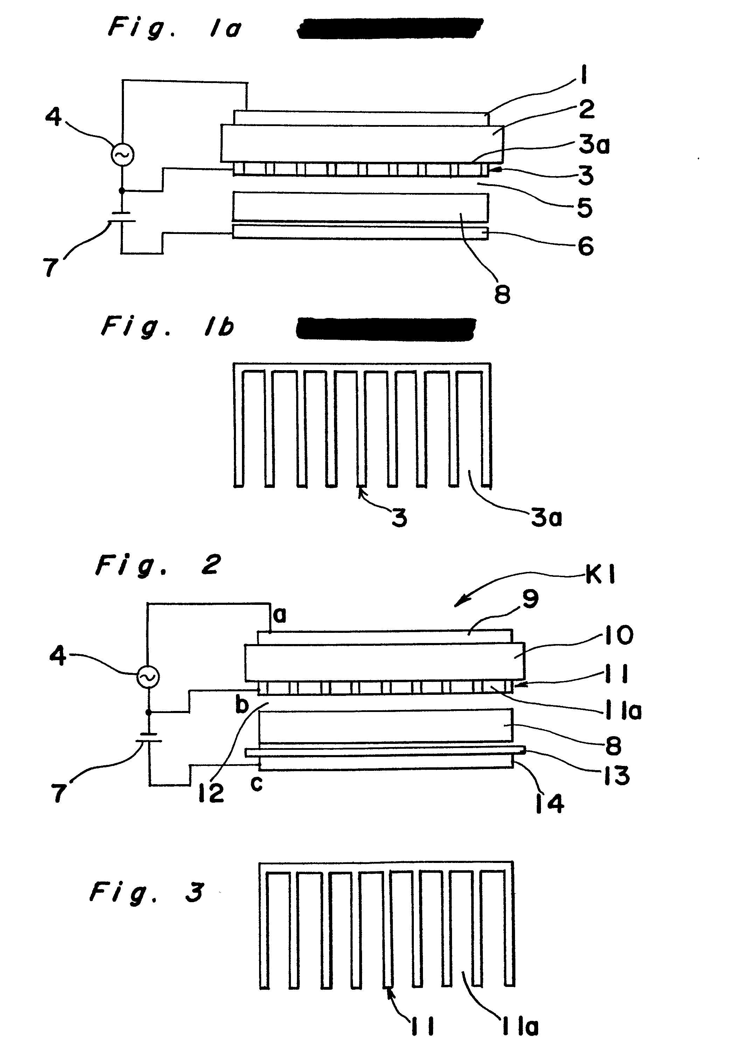

Referring now to the drawings, there is shown in Fig. 2 an activation apparatus K1 according to a first embodiment of the present invention. The activation apparatus K1 includes a platelike opposite electrode 9, a comb-shaped excitation electrode 11, a dielectric member 10 disposed between the opposite electrode 9 and the excitation electrode 11 and a high-voltage AC power source 4 for impressing a high AC voltage between the opposite electrode 9 and the excitation electrode 11. The high-voltage power source 4 is connected, at terminals a and b, to the opposite electrode 9 and the excitation electrode 11, respectively. As shown in Fig. 3, the excitation electrode 11 has a plurality of long slots 11a extending in a widthwise direction thereof.

This activation apparatus K1 further includes a platelike ion inducing electrode 14, a platelike dielectric liner 13 disposed between the excitation electrode 11 and the ion inducing electrode 14 and a high-voltage DC power source 7 for impressing a high DC voltage between the excitation electrode 11 and the ion inducing electrode 14. The high-voltage DC power source 7 is connected, at the terminal b and a terminal c, to the excitation electrode 11 and the ion inducing electrode 14, respectively and the dielectric liner 13 covers an electrode surface of the ion inducing electrode 14. A treatment space 12 is defined between the excitation electrode 11 and the dielectric liner 13 such that the excitation electrode 11 confronts, through the treatment space 12 and the dielectric liner 13, the ion inducing electrode 14. A platelike article 8 to be treated is inserted into the treatment space 12 such that the dielectric member 13 is disposed between the article 8 and the ion inducing electrode 14.

The activation apparatus Kl of the above described arrangement is operated at subatmospheric pressure or under various gaseous atmospheres such as oxygen gas, nitrogen gas, etc. in accordance with activation purposes. Meanwhile, the activation apparatus Kl is operated under various environmental conditions including high and low temperatures, high and low pressures, etc. When the activation apparatus Kl is operated, the article 8 is inserted into the treatment space 12 defined between the excitation electrode 11 and the dielectric liner 13 as shown in Fig. 2. When an AC high voltage from the AC power source 4 is applied between the opposite electrode 9 and the excitation electrode 11, gas present in the treatment space 12 is ionized on a surface of the excitation electrode 11 and thus, plasma is produced. In the treatment space 12, an electric field is produced in which electrons proceed from the excitation electrode 11 to the ion inducing electrode 14. Accordingly, the article 8 is activated, on its surface confronting the excitation electrode 11, by negative ions in the plasma. As described above, the dielectric liner 13 is interposed between the article 8 and the ion inducing electrode 14 so as to cover the electrode surface of the ion inducing electrode 14. Thus, since plasma ions generated from the excitation electrode 11 are not directed towards the ion inducing electrode 14 in a locally concentrated manner, such an undesirable phenomenon does not take place as local

0178907

concentration of activation of the article 8, for example, activation of only an end portion of the article 8. Meanwhile, in this embodiment of the present invention, the DC power source 7 is connected to the excitation electrode 11 and the ion inducing electrode 14 such that the excitation electrode 11 and the ion inducing electrode 14 act as a cathode and an anode, respectively. It is to be noted that when the article 8 is activated, on the surface, by the activation apparatus K1, the activation apparatus K1 and the article 8 are linearly displaced relative to each other.

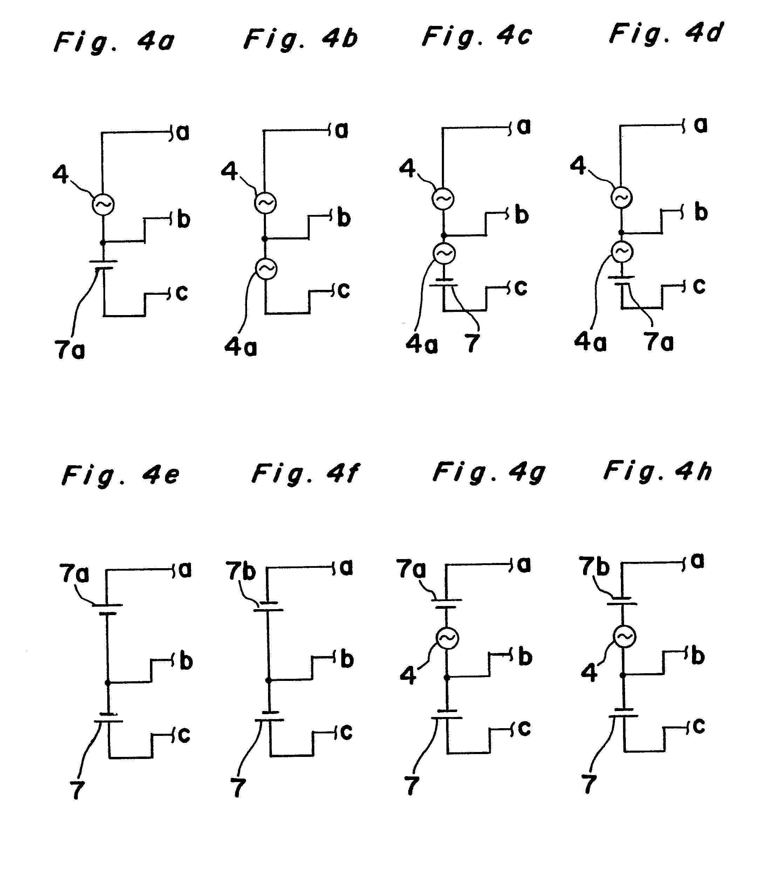

However, the AC power source 4 and the DC power source 7 of the activation apparatus K1 can be modified variously as shown in Figs. 4a to 4h. In Fig. 4a, the high-voltage DC power source 7 is replaced by another high-voltage DC power source 7a having a polarity opposite to that of the DC power source 7, while in Fig. 4b, the high-voltage DC power source 7 is replaced by another high-voltage AC power source 4a. In Fig. 4c, the high-voltage AC power source 4a is provided in addition to the AC power source 4 and the DC power source 7, while in Fig. 4d, the DC power source 7 is replaced by the AC power source 4a and the DC power source 7a. Meanwhile, it can also be so arranged that a single-pole or double-pole high-voltage pulse power source is employed in place of or in addition to the high-voltage DC power source 7. It is to be noted here that the high-voltage AC power source 4 is connected to the opposite electrode 9 and the excitation electrode 11 so as to produce plasma creeping along the surface of the excitation electrode 11. In Fig. 4e, the AC power source 4 is replaced by the DC power source 7a, while in Fig. 4f, the AC power source 4 is replaced by still another high-voltage DC power source 7b having a polarity identical with that of the DC power source 7. Furthermore, in Fig. 4g, the DC power source 7a is provided in addition to the AC power source 4 and the DC power source 7, while in Fig. 4h, the DC power source 7b is provided in addition to the AC power source 4 and the DC power source 7. Furthermore, it can also be so arranged that a single-pole or double-pole high-voltage pulse power source is employed in place of or in addition to the high-voltage AC power source 4.

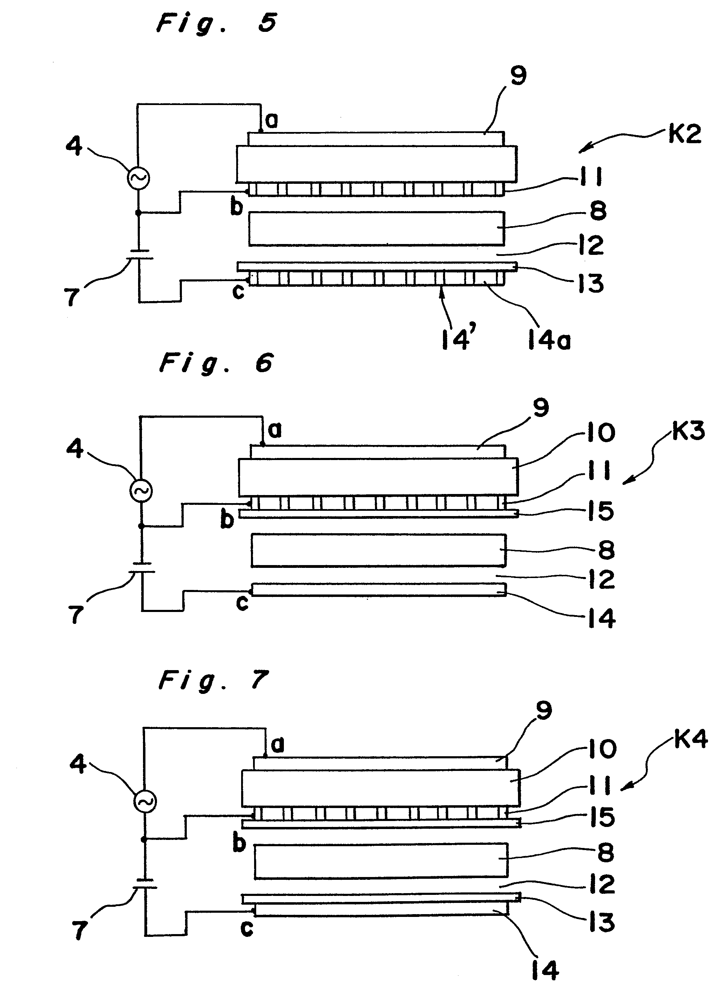

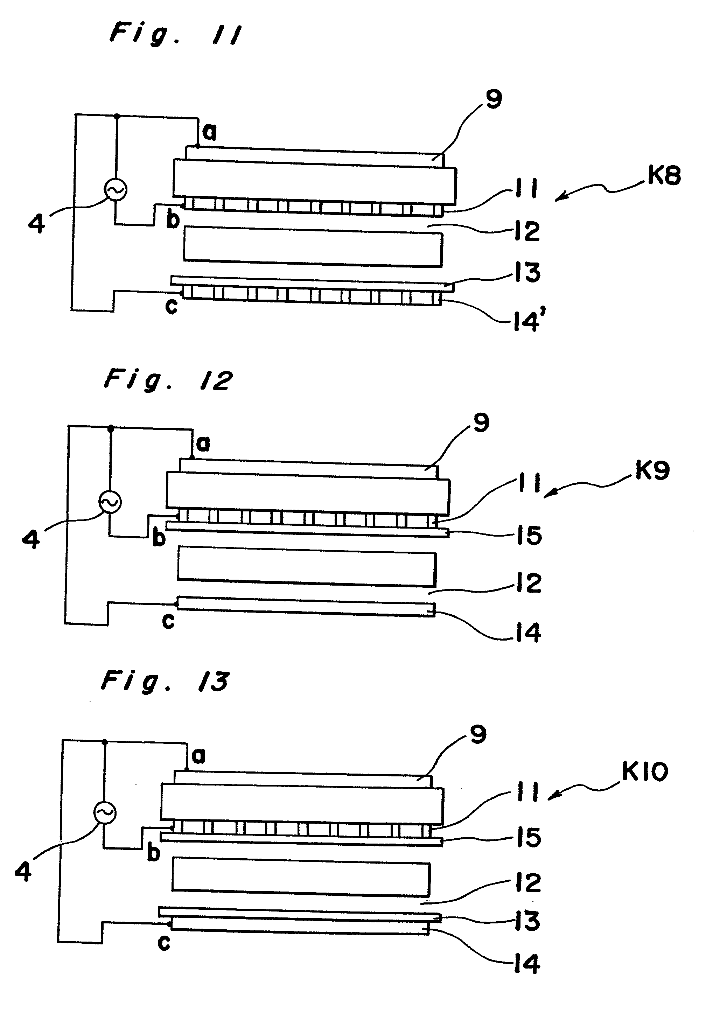

Referring to Figs. 5 to 21, there are shown activation apparatuses K2 to K18 according to second to eighteenth embodiments of the present invention, respectively. In the activation apparatus K2 of Fig. 5, a plate-like ion inducing electrode 14 of the activation apparatus K1 is replaced by a comb-shaped ion inducing electrode 14' which has a plurality of long slots 14a extending in its widthwise direction as in the excitation electrode 11. Thus, the electric field in the treatment space 12 is concentrated to a proper level by the ion inducing electrode 14'. In the activation apparatus K3 of Fig. 6, the dielectric liner 13 of the activation apparatus K1 is not provided but a dielectric liner 15 is so provided as to be disposed between the article 8 and the excitation electrode 11 such that an electrode surface of the excitation electrode 11 is covered by the dielectric liner 15. Thus, such undesirable phenomena are prevented by the dielectric liner 15 that ions induced from the excitation electrode 11 are directed towards the ion inducing electrode 14 in a locally concentrated manner and that conductive fine particles generated from the excitation electrode 11 due to electric discharge or mechanical wear thereof adhere to or penetrate into the article 8.

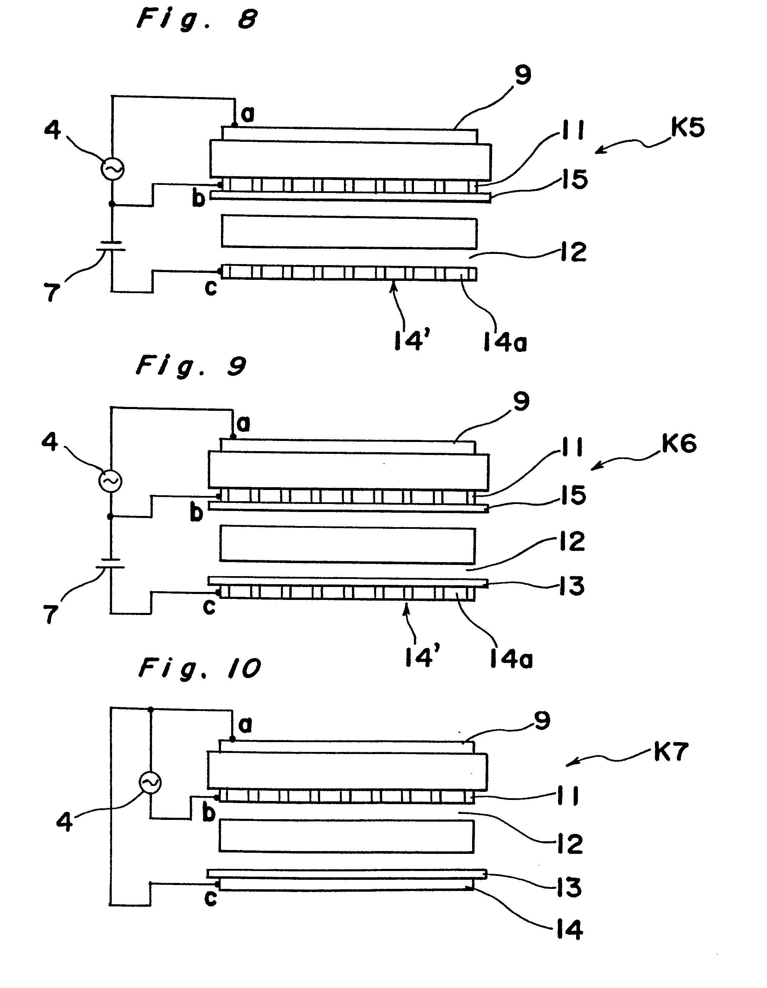

Meanwhile, in the activation apparatus K4 of Fig. 7, both the dielectric liner 13 of the activation apparatus K1 and the dielectric liner 15 of the activation apparatus K3 are employed. By this arrangement of the activation apparatus K4, such undesirable phenomena are prevented that the article 8 is activated in a locally concentrated manner and that conductive fine particles from the excitation electrode 11 adhere to or penetrate into the article 8. In the activation apparatus K5 of Fig. 8, the platelike ion inducing electrode 14 in the activation apparatus K3 of Fig. 6 is replaced by the comb-shaped ion inducing electrode 14' which has a plurality of the long slots 14a extending in its widthwise direction. By this arrangement of the activation apparatus K5, the electric field in the treatment space 12 is concentrated to a proper level in addition to achievement of the same effects as those of the activation apparatus K3.

Furthermore, in the activation apparatus K6 of Fig. 9, the platelike ion inducing electrode 14 in the activation apparatus K4 of Fig. 7 is replaced by the comb-shaped ion inducing electrode 14' which has a plurality of the long slots 14a extending in its widthwise direction. By this arrangement of the activation apparatus K6, the electric field in the treatment space 12 is concentrated to a proper level in addition to achievement of the same effects as those of the activation apparatus K4.

In the activation apparatuses K2 to K6 referred to above, the high-voltage AC power source 4 is connected to the opposite electrode 9 and the excitation electrode 11 and the high-voltage DC power source 7 is connected to the excitation electrode 11 and the ion inducing electrode 14 or 14' in the same manner as in the activation apparatus K1. However, it is needless to say that the AC power source 4 and the DC power source 7 of the activation apparatuses K2 to K6 can also be modified variously as shown in Figs. 4a to 4h in the same manner as in the activation apparatus K1.

In the activation apparatuses K7 to K12 illustrated in Figs. 10 to 15, respectively, the DC power source 7 for impressing the high DC voltage between the excitation electrode 11 and the ion inducing electrode 14 or 14' is eliminated such that the AC power source 4 impresses the high AC voltage also between the excitation electrode 11 and the ion inducing electrode 14 or 14'. Other constructions of the activation apparatuses K7 to K12 correspond to those of the activation apparatuses K1 to K6, respectively. By the above described arrangement of the activation apparatuses K7 to K12, since an electric field synchronous with that between the opposite electrode 9 and the excitation electrode 11 is formed in the treatment space 12, an ion irradiation rate from the excitation electrode 11 rises.

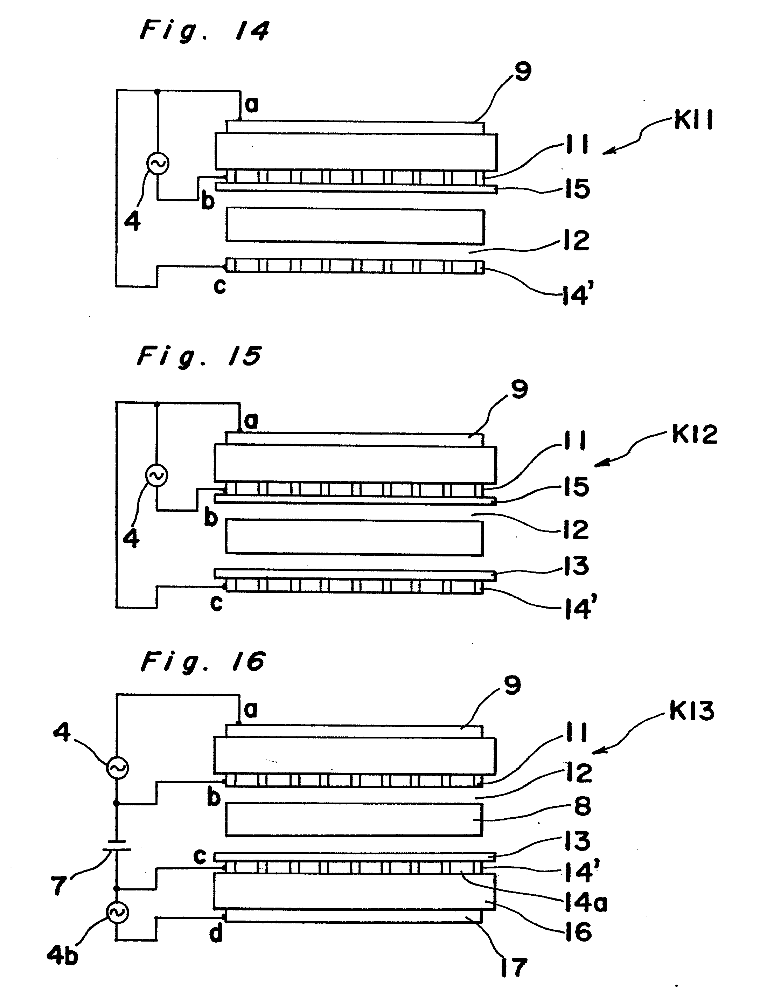

Meanwhile, the activation apparatus K13 of Fig. 16 is obtained by additionally providing another dielectric member 16, another platelike opposite electrode 17 and another high-voltage AC power source 4b for impressing a high AC voltage between the ion inducing electrode 14' and the opposite electrode 17 in the activation apparatus K2 of Fig. 5. Namely, the dielectric member 16 is disposed on a surface of the ion inducing electrode 14' remote from the treatment space 12 such that the dielectric member 16 is interposed between the ion inducing electrode 14' and the opposite electrode 17. The AC power source 4b is connected, at the terminal c and a terminal d, to the ion inducing electrode 14' and the opposite electrode 17, respectively. By the above described arrangement of the activation apparatus K13, since surface discharge from the ion inducing electrode 14' is effected along the surface of the dielectric liner 13, gas is excited also along a surface of the ion inducing electrode 14', which confronts the treatment space 12 and thus, plasma creeping along the surface of the ion inducing electrode 14' is produced. Thus, positive ions in the plasma creeping along the surface of the ion inducing electrode 14' is induced into the treatment space 12 by the electric field produced by the DC power source 7 so as to proceeds towards the excitation electrode 11. Thus, the article 8 is activated, also on a surface thereof confronting the ion inducing electrode 14', by the positive ions in the plasma creeping along the surface of the ion inducing electrode 14'. Meanwhile, negative ions in the plasma creeping along the surface of the excitation electrode 11 proceed towards the ion inducing electrode 14'. Accordingly, the article 8 inserted into the treatment space 12 is activated, on opposite surfaces thereof, by the negative ions in the plasma creeping along the surface of the excitation electrode 11 and the positive ions in the plasma creeping along the surface of the ion inducing electrode 14', respectively. In this case, in order to impart highly efficiently the positive ions of the plasma creeping along the surface of the ion inducing electrode 14', to the surface of the article 8 confronting the ion inducing electrode 14', it is desirable to decrease thickness of the dielectric liner 13 as much as possible. For example, to this end, it can also be so arranged that the dielectric liner 13 is replaced by dielectric material coated thinly on the surface of the ion inducing electrode 14'. By the above described arrangement of the activation apparatus K13, it becomes possible to eliminate local activation of the article 8.

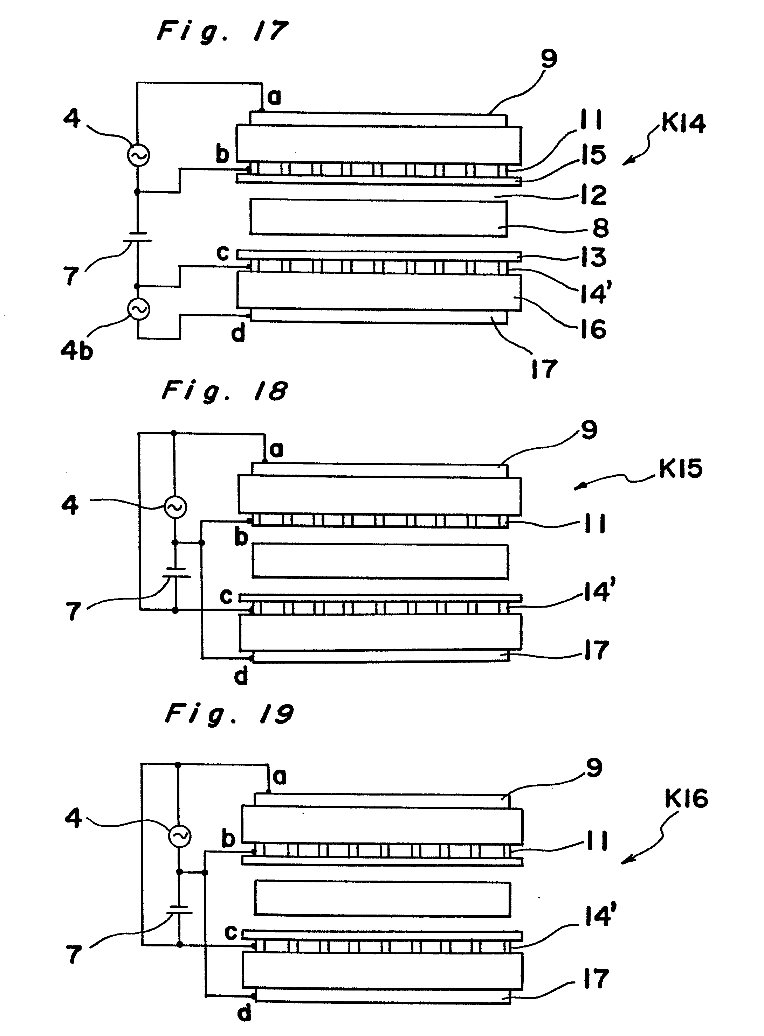

Furthermore, the activation apparatus K14 of Fig. 17 is obtained by additionally providing the dielectric liner 15 in the activation apparatus K13 such that the dielectric liner 15 is disposed between the excitation electrode 11 and the article 8 inserted into the treatment space 12. Since the electrode surface of the excitation electrode 11 is covered by the dielectric liner 15, such an undesirable phenomenon is prevented that conductive fine particles generated from the surface of the excitation electrode 11 due to electric discharge or mechanical wear thereof adhere to or penetrate into the article 8. In order to prevent the dielectric liner 15 from excessively reducing intensity of the electric field in the treatment space 12, it is desirable to minimize thickness of the dielectric liner 15. For example, to this end, it can also be so arranged that the dielectric liner 15 is replaced by dielectric material coated thinly on the surface of the excitation electrode 11. In this activation apparatus K14, since gas is excited also along a surface of the ion inducing electrode 14' confronting the treatment space 12, plasma creeping along the surface of the ion inducing electrode 14' is produced in the same manner as in the activation apparatus K13. Thus, the article 8 is activated, also on a surface thereof confronting the ion inducing electrode 14', by positive ions in the plasma creeping along the surface of the ion inducing electrode 14'. In the same manner as in the activation apparatus K4 of Fig. 7, such undesirable phenomena are obviated in the activation apparatus K14 that the article 8 is activated in a locally concentrated manner and that conductive fine particles from the excitation electrode 11 adhere to or penetrate into the article 8. It is needless to say that the AC power source 4 and the DC power source 7 of the activation apparatuses K13 and K14 can also be modified variously as shown in Figs. 4a to 4h.

Furthermore, the activation apparatuses K15 and K16 illustrated in Figs. 18 and 19, respectively are obtained by eliminating the high-voltage AC power source 4b from the activation apparatuses K13 and K14, respectively such that the AC power source 4 acts also as the AC power source 4b. Namely, in the activation apparatuses K15 and K16, in order to eliminate the AC power source 4b, the excitation electrode 11 and the opposite electrode 17 are connected to each other and, at the same time, the ion inducing electrode 14' and the opposite electrode 9 are connected to each other. The AC power source 4 and the DC power source 7 of the activation apparatuses K15 and K16 can also be modified variously as shown in Figs. 4a to 4h.

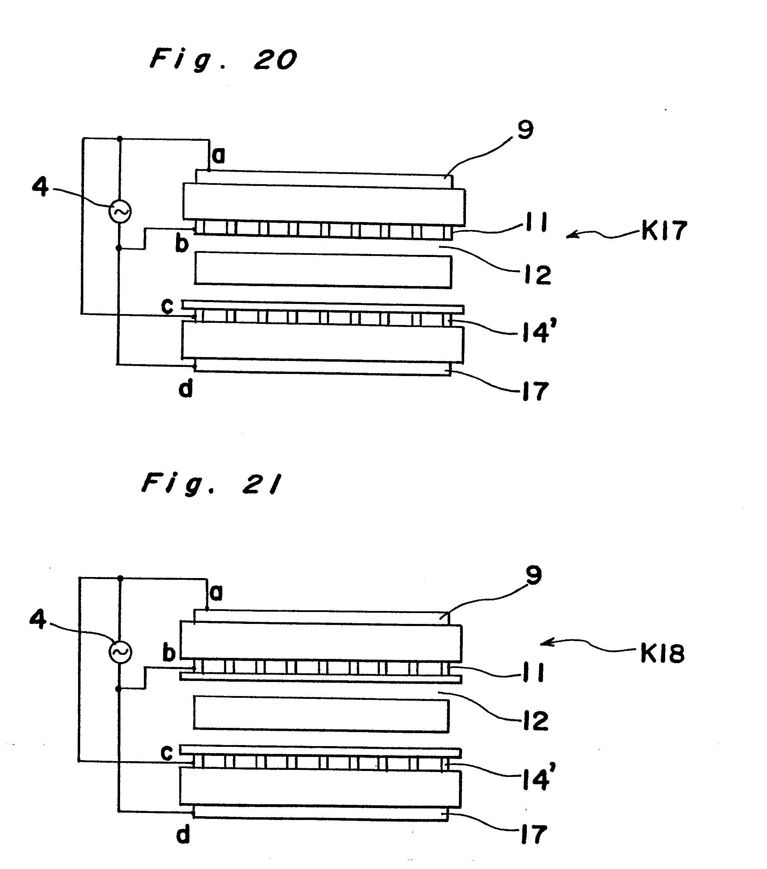

Moreover, the activation apparatuses K17 and K18 illustrated in Figs. 20 and 21, respectively are obtained by eliminating the high-voltage DC power source 7 from the activation apparatuses K15 and K16, respectively such that the AC power source 4 impresses the high AC voltage also between the excitation electrode 11 and the ion inducing electrode 14'. Namely, in the activation apparatuses K17 and K18, the excitation electrode 11 and the opposite electrode 17 are connected to each other via the AC power source 4. Thus, since an electric field synchronous with the AC power source 4 is formed in the treatment space 12, an ion irradiation rate from the excitation electrode 11 rises.

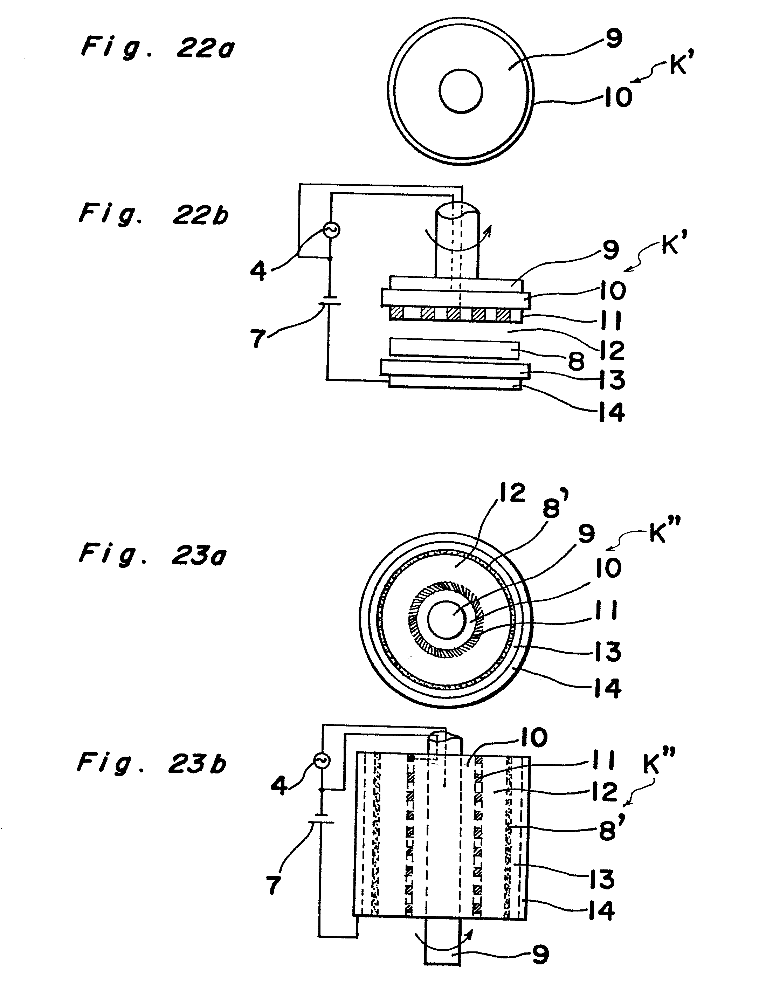

Referring further to Figs. 22 and 23, there are shown cylindrical activation apparatuses K' and K'' which are first and second modifications of the present invention, respectively. When the article 8 is activated, on the surface, by the activation apparatuses K' and K'', the activation apparatuses K' and K'' are rotated relative to the article 8. More specifically, the activation apparatus K' confronting axially the article 8 is rotated relative to the article 8 about an axis extending at right angles to the opposite surfaces of the article 8, while the activation apparatus K'' confronting radially an annular article 8' is rotated relative to and coaxially with the article 8'.

In the above described embodiments of the present invention, the excitation electrode 11 and the ion inducing electrode 14' are, respectively, formed with a plurality of the slots 11a extending in the widthwise direction and a plurality of the slots 14a extending in the widthwise direction. Likewise, if the surfaces of the excitation electrode 9 and the ion inducing electrode 14, which confront the article 8, are formed into uneven surfaces having a small radius of curvature, the electric field in the treatment space 12 is preferably concentrated to a proper level. To this end, it can also be so arranged that the excitation electrode and the ion inducing electrode are each formed into a strip or a plate constituted by a plurality of strips and having a plurality of elongated slots formed between adjacent ones of the strips or a plate formed with a plurality of slits or a brushlike member. However, it is to be noted that the excitation electrode is not necessarily required to be formed with a plurality of the slots.

In the activation apparatus of the present invention, the excitation electrode and the opposite electrode are made of electrically conductive material such as metals, for example, tungsten, aluminium, steel, stainless steel, brass, copper, carbon, etc. Meanwhile, the dielectric member and the dielectric liner are made of, for example, rubber, glass, ceramics, plastics (e.g., epoxy resin, polyimide nylon and fluorine plastics such as 2-vinylidene fluoride 4-ethylene fluoride 6-propylene fluoride copolymer, 4-ethylene fluoride perfluoroalkoxy copolymer resin, etc), enamel, asbestos, marble, slate, mica, etc.

As is clear from the foregoing description, the activation apparatus according to the present invention comprises the dielectric liner which is disposed between the article and at least one of the excitation electrode and the ion inducing electrode so as to cover the electrode surface of the one of the excitation electrode and the ion inducing electrode.

Accordingly, in accordance with the present invention, in the case where the dielectric liner is disposed between the excitation electrode and the article, such an undesirable phenomenon is prevented that conductive fine particles generated from the excitation electrode adhere to or penetrate into the article.

Meanwhile, in accordance with the present invention, in the case where the dielectric liner is disposed between the ion inducing electrode and the article, it becomes possible to prevent local concentration of activation of the article, with consequent uniform activation of the overall surface of the article.

Namely, in accordance with the present invention, since the dielectric liner is disposed, in the space for receiving the article, between the article and at least one of the electrodes defining the space for receiving the article so as to cover the electrode surface of the one of the electrodes, the article is activated on the surface to a desired level.

Hereinbelow, an activation method according to the present invention will be described. In view of the

- 21 -

0178907

aforesaid drawbacks of the prior art activation methods, the present inventors considered an activation method utilizing plasma to be most convenient and effective and examined its applications variously. However, in the case of an activation method utilizing plasma at subatmospheric pressure in wide use, activated articles have excellent performance but activation is required to be performed at subsatmospheric pressure of, for example, not more than 5 mmHg. Thus, the activation method utilizing plasma at subatmospheric pressure has such an inconvenience that in the case where a large molded item or a long article or a large amount of powder is activated, an activation apparatus therefor becomes large in size or requires a complicated mechanism due to the need for sealing the activation apparatus.

In order to obviate such inconvenience, the activation method of activating a surface of an article, according to the present invention comprises the steps of: impressing a high voltage between an excitation electrode and an opposite electrode so as to effect electric discharge therebetween such that the electric discharge forms an electric discharge region; feeding gas to the electric discharge region so as to convert the gas into plasma; and injecting the plasma over the article.

In the activation method of the present invention, the excitation electrode and the opposite electrode are made of electrically conductive material such as metals and are not specifically restricted in shape. In the case where the excitation electrode and the opposite electrode interpose a dielectric member therebetween, it is desirable that the excitation electrode is formed with a plurality of slits or is formed into a coiled shape, an annular shape, etc. so as to expose the dielectric member outwardly such that plasma creeping along a surface of the excitation electrode is produced.

Furthermore, it is desirable that a power source for impressing a high voltage between the excitation electrode and the opposite electrode outputs generally a voltage of 10 to 50 kV or more preferably of 10 to 30 kV having a frequency of 1 to 100 kHz. The output of the power source should be selected properly in accordance with activation purposes. A known power source circuit can be employed for the activation method of the present invention. However, in a power source circuit for the activation method of the present invention, it is desirable that discharge current for producing plasma can be controlled to an arbitrary value in accordance with load conditions and that frequency and output of the high-voltage power source can be adjusted to an optimum level. It is further desirable that a time period during which the power source outputs the high voltage is set at an arbitrary value through presetting of a timer such that an activation time period can be controlled to a predetermined value.

Moreover, the gas fed to the electric discharge region includes one of or two or more of, for example, air, nitrogen, oxygen, carbon dioxide, carbon monoxide, ammonia, nitrogen oxide, carbon halide, hydrocarbon halide, vinyl compounds, argon, helium, etc. in accordance with activation purposes. These gases are generally used at atmospheric pressure or at slightly subatmospheric pressure but can also be used at subatmospheric pressure or at super-atmospheric pressure. It is possible to properly select temperature of the gases. In view of operational convenience and production efficiency, it is most preferable to employ air held at ordinary temperature and pressure.

Meanwhile, a pump, a blower or the like is employed for feeding the gas to the electric discharge region. For injecting the active gas over the article, a pump, a blower or the like is employed or it is also possible to use an inertia force of the gas fed to the electric discharge region. If a passage for the gas is provided, operational efficiency of the activation apparatus improves desirably. The gas passage is not specifically restricted in shape and can be formed into, for example, a tubular shape having a circular, elliptic or polygonal cross section or a boxlike shape. The gas passage may be formed by only the excitation electrode and the opposite electrode but can also be formed by the excitation electrode, the opposite electrode and the dielectric member disposed between the excitation electrode and the opposite electrode. Namely, for example, such an arrangement can be employed in which the dielectric member of a tubular or boxlike shape has the excitation electrode and the opposite electrode provided on its inner and outer peripheral surfaces, respectively. Furthermore, it can also be so arranged that the gas passage is formed separately from the electrodes so as to surround the electrodes as in the case where the electric discharge region of the electrodes is provided adjacent to the axis of the tubular shape defining the gas passage.

In the activation method of the present invention, it can be so arranged that the dielectric member of a tubular or boxlike shape has the excitation electrode and the opposite electrode provided on its inner and outer peripheral surfaces, respectively and the excitation electrode confronts, via a space, an ion inducing electrode such that the excitation electrode and the ion inducing electrode are connected to a high-voltage power source. Moreover, it can be so arranged that the ion inducing electrode is provided, at one side remote from the excitation electrode, with a further opposite electrode through a further dielectric member such that the ion inducing electrode and the further opposite electrode are connected to a high-voltage power source.

In the activation method of the present invention, the articles to be treated include plastic products, fibrous products, molded items made of paper, wood, metal or the like, powdery items such as metal powder, metallic oxide powder, pigment or the like, etc. but are not restricted to the above described items. Furthermore, activation purposes of the activation method of the present invention include improvement of such characteristics of the molded items as surface adhesive property, coating property, bonding property, wettability, durability or the like and improvement of such characteristics of the powdery items as wettability, dispersion property or the like but are not restricted to these improvements. When one or both of the article and an injection port for the gas are arranged to be displaced relative to each other, it becomes possible to easily, rapidly and uniformly activate even an article having a complicated contour. Feed rate of the gas and injection speed of the active gas can be properly selected in accordance with impressed voltage, frequency, kinds of the article, etc. Meanwhile, activation time period can also be selected properly based on impressed voltage, frequency, kinds of the article, feed rate of the gas, injection speed of the active gas, activation purposes, etc.

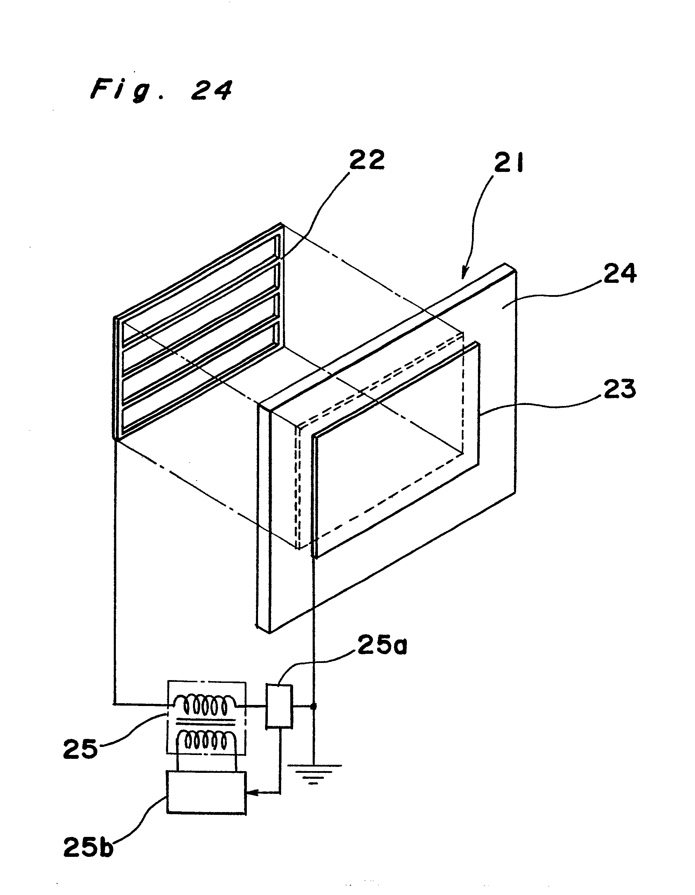

Hereinbelow, detailed description of the activation method of the present invention will be given with reference to the drawings showing activation apparatuses for carrying out the activation method of the present invention. Referring now to Figs. 24 to 26, there is shown a first activation apparatus S1 for carrying out the activation method of the present invention. The first activation apparatus S1 includes a pair of electrode units 21. As shown in Fig. 24, the electrode unit 21 includes an excitation electrode 22, a sheetlike opposite electrode 23 and a sheetlike dielectric member 24 disposed between the excitation electrode 22 and the opposite electrode 23. A high voltage power source 25 is connected between the excitation electrode 22 and the opposite electrode 23. The high-voltage power source 25 is provided with a sensor 25a for detecting current intensity and voltage and a control device 25b for controlling the high-voltage power source 25. Thus, detection signals outputted from the sensor 25a are fed back to the control device 25b such that the high-voltage power source 25 can be arbitrarily set at optimum current intensity and voltage outputs in accordance with load conditions. The excitation electrode 22 has a latticed shape such that the dielectric member 24 is exposed outwardly. Meanwhile, the opposite electrode 23 is grounded.

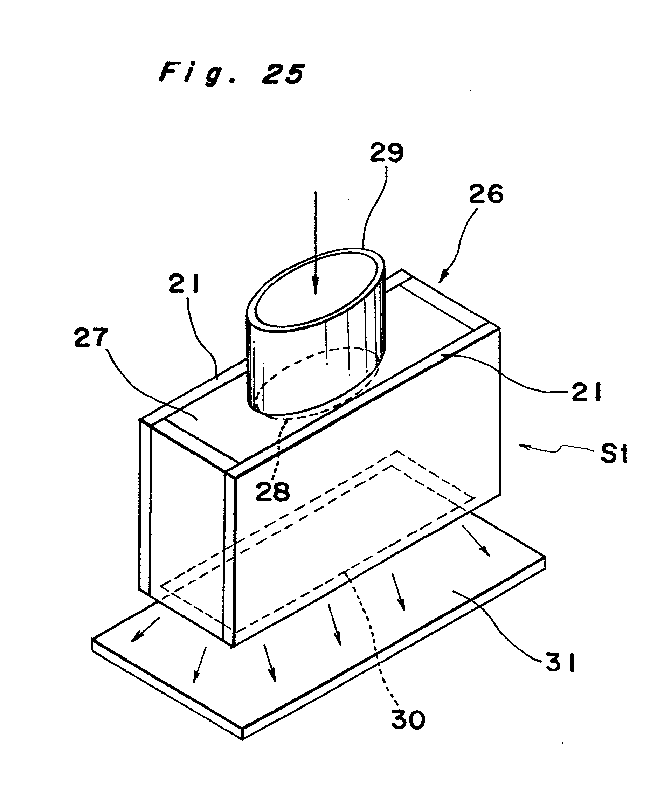

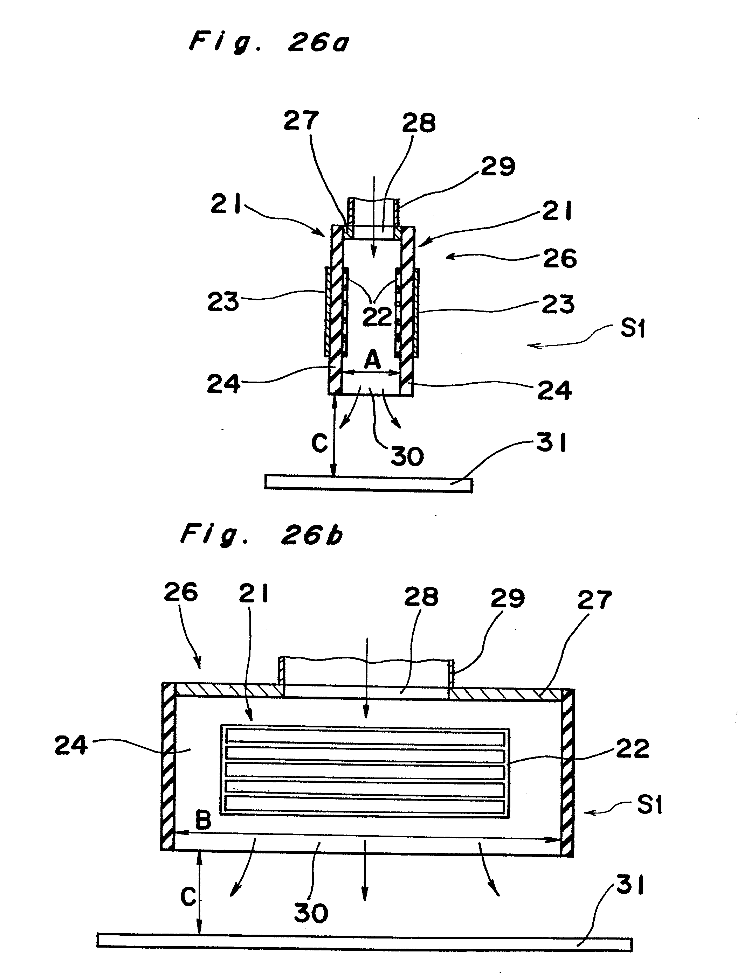

As shown in Fig. 25, the first activation apparatus S1 includes a boxlike member 26 in which a gas passage is defined. The boxlike member 26 has a pair of the electrode units 21 acting as one pair of opposite side walls thereof, respectively such that the excitation electrodes 22 of the respective electrode units 21 confront each other in the boxlike member 26 as best shown in Fig. 26a. The boxlike member 26 is formed, at its top wall 27, with a gas inlet 28 and a pipe 29 for conveying gas supplied from a blower (not shown) is connected with the gas inlet 8. A bottom portion of the boxlike member 26 is open so as to act as an injection port 30. The other pair of opposite side walls of the boxlike member 26 are formed by other dielectric members as shown in Fig. 26b but can be replaced by the electrode units 21 or the like.

The gas drawn into the boxlike member 26 from the gas inlet 28 is activated while flowing through an electric discharge region and then, is injected over a platelike article 31 from the injection port 30 so as to activate the surface of the article 31. It is to be noted here that the arrows in Figs. 25, 26a and 26b indicate directions of flow of the gas.

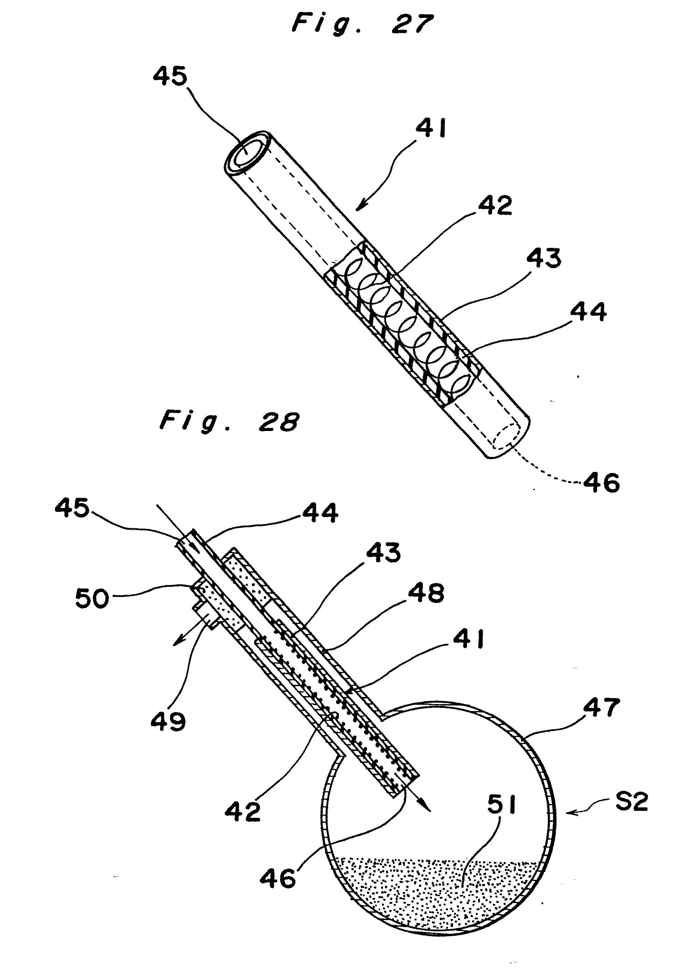

Referring to Figs. 27 and 28, there is shown a second activation apparatus S2 for carrying out the activation method of the present invention. The second activation apparatus S2 includes a tubular electrode unit 41. As shown in Fig. 27, the electrode unit 41 includes an annular dielectric member 44, a coiled excitation electrode 42 disposed inside the dielectric member 44 and a netted opposite electrode 43 surrounding the dielectric member 44 such that the dielectric member 44 is interposed between the excitation electrode 42 and the opposite electrode 43. A high-voltage power source (not shown) is connected between the excitation electrode 42 and the opposite electrode 43. The electrode unit 41 has a gas inlet 45 and an injection port 46 formed at opposite open ends thereof, respectively.

As shown in Fig. 28, the second activation apparatus S2 further includes a round flask 47 for containing powder material 51 to be treated. The electrode unit 41 is inserted into a neck 48 of the round flask 47 in its axial direction. One end of the dielectric member 44 of the electrode unit 41 projects out of a distal end of the neck 48 of the round flask 47 so as to be connected with a blower (not shown). The neck 48 has an exhaust port 49 formed at a side portion thereof. Furthermore, a gas passage is defined between the neck 28 and the electrode unit 21 so as to be communicated with the exhaust port 49 via a filter 50. The powder material 51 is accommodated in the round flask 47. Gas conveyed from the blower is drawn from the gas inlet 45 into an electric discharge portion formed inside the electrode unit 41. The gas is converted into active gas at the electric discharge portion. Thereafter, the active gas is injected from the injection port 46 over the powder material 51 so as to activate the powder material 51 through agitation thereof and then, is discharged, by way of the filter 50, out of the exhaust port 49. Meanwhile, although not specifically shown, the round flask 47 is arranged to be rotated about the axis of the neck 48 by a motor through a belt, while the electrode unit 41 is fixedly supported so as not to be rotated together with the rotating round flask 47. It is to be noted here that the arrows in Fig. 28 indicate directions of flow of the gas. It should be further noted that the activation apparatus for carrying out the activation method of the present invention is not restricted to those S1 and S2 but the aforesaid activation apparatuses K1 to K18, K' and K" can also be employed therefor.

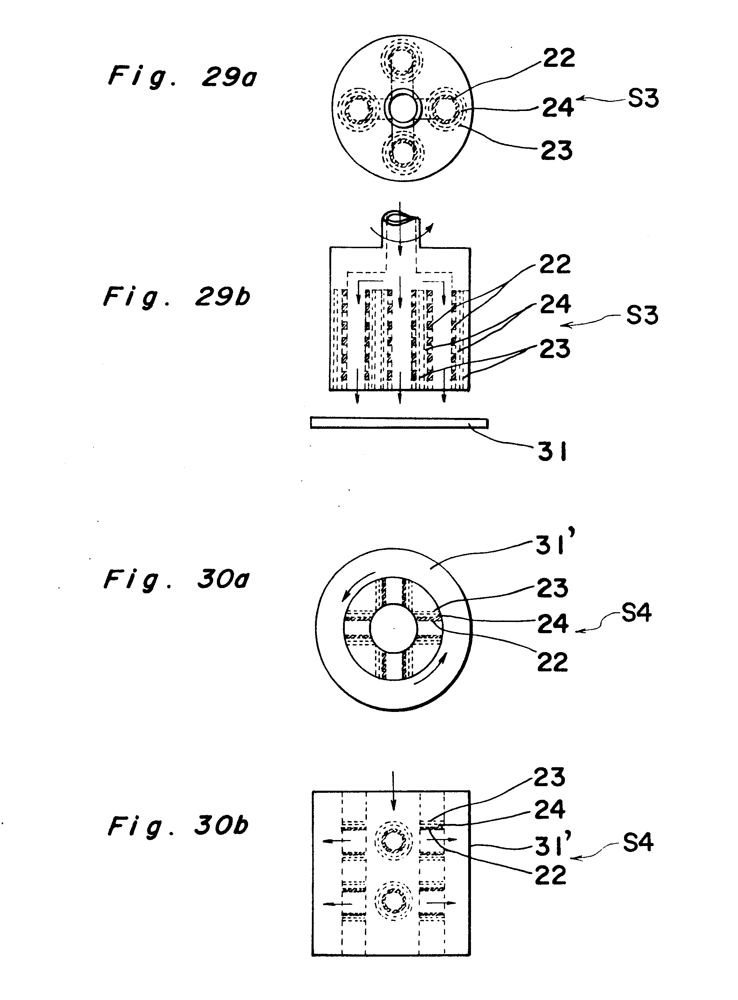

Referring further to Figs. 29 and 30, there are shown third and fourth cylindrical activation apparatuses S3 and S4 for carrying out the activation method of the present invention, respectively. The activation apparatus S3 has a plurality of axially extending cylindrical gas passages each defined by the cylindrical excitation electrode 22. The activation apparatus S3 axially confronts the article 31 and is rotated relative to the article 31 about an axis extending at right angles to the opposite surfaces of the article 31. Meanwhile, the activation apparatus S4 has a plurality of radially extending cylindrical gas passages each defined by the cylindrical excitation electrode 22. An annular article 31' is rotated relative to and coaxially with the activation apparatus S4.

Hereinbelow, the activation method of the present invention will be described in more detail with reference to its concrete examples.

Example 1

In Fig. 1, the dielectric member 24 is made of ceramics and has a thickness of 0.5 mm so as to be provided, at opposite surfaces thereof, with the excitation electrode 22 and the opposite electrode 23. A pair of the electrode units 21 of the above described arrangement are assembled into the first activation apparatus S1 of Fig. 25 such that dimensions A and B in Figs. 26a and 26b assume 5 mm and 13 cm, respectively. A sheet made of polypropylene was surface treated by using this first activation apparatus S1. By setting a distance C (Figs. 26a and 26b) between the injection port 30 and the polypropylene sheet at 1 cm, a voltage of 25 kV having a frequency of 5 kHz is impressed between the excitation electrode 22 and the opposite electrode 23 so as to effect electric discharge under atmosphere of air such that active gas generated by the electric discharge is injected over the polypropylene sheet, whereby the polypropylene sheet was surface treated.

Thereafter, two-port liquid system polyurethane is applied to the surface treated polypropylene sheet and its bonding property was estimated by 180° peeling strength as shown in Table 1 below. Meanwhile, the polypropylene sheet had a peeling strength of 200 g/cm or less before the surface treatment. Thus, it will be readily seen from Table 1 that peeling strength, i.e. bonding property of the polypropylene sheet has been remarkably improved by the surface treatment.

Table 1

| Injection Time (min.) | Peeling Strength (g/cm) |
|---|---|
| 1 | 400 |
| 3 | 2,000 |
| 5 | 2,100 |
| 0 | < 200 |

Example 2

Quinacridone pigment was surface treated by using the activation apparatus S2 of Fig. 28. 30 parts by weight of the quinacridone pigment is put into the round flask 47 and then, the round flask 47 is rotated at 30 rpm. A voltage of 25 kV having a frequency of 5 kHz is impressed to the electrode unit 41 and air is drawn from the gas inlet 45 into the electrode unit 41 so as to effect electric discharge under atmosphere of air such that active gas generated by the electric discharge is injected over the quinacridone pigment, whereby the quinacridone pigment was surface treated.

Subsequently, 40 parts by weight of alkyd resin modified by coconut oil, which has an acid value of 8, a hydroxyl value of 80 and contains 60 % by weight of solid contents, and 40 parts by weight of Solvesso 100 (name used in trade and manufactured by Esso Standard Oil of Japan) acting as a solvent are added to 20 parts by weight of the treated quinacridone pigment and then, are dispersed by a SG mill for four hours so as to obtain dispersed paste. Table 2 below shows viscosities and yield values (obtained from Casson's equation) of respective dispersed pastes of the untreated pigment, the pigment subjected to the surface treatment for 30 min. and the pigment subjected to the surface treatment for 60 min. The viscosities were measured by a cone plate type viscometer, for example, an E type viscometer (name used in trade and manufactured by Tokyo Precision Instrument Co., Ltd. of Japan).

Table 2

|  | Viscosity (cP)* | Yield Value (dyne/cm²) |
|---|---|---|
| Treated for 30 min. | 730 | 80 |
| Treated for 60 min. | 490 | 40 |
| Untreated | 1,200 | 130 |

*      Shear rate = 19.2 (sec.$^{-1}$)

It will be readily understood from Table 2 that both the viscosities and the yield values of the dispersed pastes of the treated pigments are reduced markedly. Consequently, dispersion property of the pigment was improved remarkably by the activation method of the present invention.

As is clear from the foregoing description, in the activation method of the present invention, the high voltage is impressed between the excitation electrode and the opposite electrode so as to effect electric discharge therebetween such that the electric discharge defines the electric discharge region. Thereafter, gas is fed to the electric discharge region so as to generate active gas such that the active gas is injected over the article.

Accordingly, in accordance with the present invention, activation processes are simplified and it becomes possible to rapidly and uniformly activate the surface of even an article having a complicated contour.

Furthermore, in accordance with the present invention, since activation of the article can be performed at ordinary temperature and pressure, kinds and contour of the article to be treated and treatment time period are not restricted and the activation apparatus for carrying out the activation method of the present invention does not become large in size or complicated in structure.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as being included therein.

CLAIMS

1.    Activation apparatus (K) which comprises an excitation electrode (11); a first opposing electrode (9); a first dielectric member (10) disposed between the excitation and first opposing electrodes (9,11); a first high-voltage AC power source (4) connected to the excitation and first opposing electrodes (9,11); an ion-inducing electrode (14) confronting and spaced from the excitation electrode (11); either the first high-voltage AC power source (4) or a separate high-voltage power source connected to, and capable of causing an electric discharge in the space (12) between, the excitation and ion-inducing electrodes (11,14); characterised in that a second dielectric (13) is disposed between the excitation and ion-inducing electrodes (11,14).

2.    Apparatus as claimed in claim 1, which further comprises a second opposing electrode (17), on the side of the ion-inducing electrode (14') remote from the space (12); a third dielectric (16), disposed between the ion-inducing and second opposing electrode (14',17); and either the first or a second high-voltage AC power source (4,4b) connected to the ion-inducing and second opposing electrodes (14',17).

3.    Apparatus as claimed in claim 2, in which there is no second high-voltage AC power source (4b).

4.    Apparatus as claimed in any preceding claim, in which there is no separate high-voltage power source.

5.    Apparatus as claimed in any preceding claim, in which either or each of the excitation and ion-inducing electrodes (11,14) has a plate-like shape and has a plurality of slots (11a,14a) extending across its width.

6.    Apparatus as claimed in any preceding claim, in which the excitation, first opposing and ion-inducing electrodes (11,14) are made of one of tungsten, aluminium, steel, stainless steel, brass, copper and carbon.

7. Apparatus as claimed in any preceding claim, in which the dielectric member (10) is made of one of rubber, glass, ceramics, plastics, enamel, asbestos, marble, slate and mica.

8. Apparatus as claimed in any preceding claim, in which the or each high-voltage AC power source (4,4b) has an output voltage of 10 to 50 kV at a frequency of 1 to 100 kHz.

9. Apparatus according to any preceding claim, in which the first dielectric member defines a gas passage having a gas inlet and a gas outlet, in which the excitation and opposing electrodes are disposed at the inner and outer peripheral faces of the member.

10. Apparatus according to claim 9, in which the gas passage is of a circular or rectangular cross-section.

11. A method of activating a surface of an article, which comprises the steps of:

    applying a high-voltage between an excitation electrode and an opposing electrode, and thereby forming an electrode discharge region;

    introducing gas to the electric discharge region, thereby converting the gas into plasma; and

    injecting the plasma over the article.

12. A method according to claim 11, in which a dielectric member is disposed between the electrodes.

13. A method according to claim 11, in which apparatus according to any of claims 1 to 10 is used.

14. A method according to any of claims 11 to 13, in which a or the gas outlet is displaced relative to the article in linear and/or rotation motion.

15. A method according to any of claims 11 to 14, in which the gas is oxygen, nitrogen or a mixture thereof.

16.   A method according to any of claims 11 to 15, in which the high-voltage ranges from 10 to 50 kV at a frequency of 1 to 100 kHz.

17.   A method according to any of claims 11 to 16, in which the article is a plastics or fibrous product, paper or wood.

Fig. la

Fig. lb

Fig. 2

Fig. 3

## Fig. 4a

## Fig. 4b

## Fig. 4c

## Fig. 4d

## Fig. 4e

## Fig. 4f

## Fig. 4g

## Fig. 4h

*Fig. 5*

*Fig. 6*

*Fig. 7*

0178907

*Fig. 8*

*Fig. 9*

*Fig. 10*

Fig. 11

Fig. 12

Fig. 13

0178907

## Fig. 14

9

KII

a

II

15

4

b

I2

c

I4'

## Fig. 15

9

KI2

a

II

15

4

b

I2

I3

c

I4'

## Fig. 16

9

KI3

4

a

II

I2

b

8

7

c

I3

I4'

I4a

I6

4b

d

I7

Fig. 17

Fig. 18

Fig. 19

*Fig. 20*

*Fig. 21*

Fig. 22a

Fig. 22b

Fig. 23a

Fig. 23b

Fig. 24

Fig. 25

## Fig. 26a

## Fig. 26b

Fig. 27

45

41

42

43

44

46

Fig. 28

45

44

50

43

48

41

49

42

47

51

S2

46

0178907

**Fig. 29a**

22
24 ← S3
23

**Fig. 29b**

22
24
23 ← S3

31

**Fig. 30a**

31'
23
24 ← S4
22

**Fig. 30b**

23
24
31' ← S4
22